# EUROPÄISCHE PATENTSCHRIFT

(11) **EP 2 561 211 B1**
(45) Veröffentlichungstag und Bekanntmachung des Hinweises auf die Patenterteilung: **11.04.2018**
(21) Anmeldenummer: 11717225.4
(22) Anmeldetag: 21.04.2011
(51) Int. Cl.: F02M 37/00, G05D 16/06

(54) **DRUCKREGEL-VENTILVORRICHTUNG FÜR DIE ZUFÜHRUNG VON KORROSIVEN MEDIEN**
PRESSURE CONTROL VALVE DEVICE FOR SUPPLYING CORROSIVE MEDIA
DISPOSITIF DE SOUPAPE DE RÉGULATION DE PRESSION SERVANT À L'AMENÉE DE MILIEUX CORROSIFS

(30) Priorität: 21.04.2010 DE 102010017916
(43) Veröffentlichungstag der Anmeldung: 27.02.2013
(73) Patentinhaber: Instrum AG, 4127 Birsfelden (CH)
(72) Erfinder: BINDER, Robert, 89150 Laichingen (DE)
(74) Vertreter: Witte, Weller & Partner Patentanwälte mbB
(86) Internationale Anmeldenummer: PCT/EP2011/056421
(87) Internationale Veröffentlichungsnummer: WO 2011/131754

(56) Entgegenhaltungen:
- EP-A1- 0 257 430
- EP-A1- 0 473 917
- EP-A2- 0 534 487
- DE-B- 1 234 469
- DE-C1- 19 837 556
- US-A- 2 524 446
- US-A- 3 643 683

## Beschreibung

Die vorliegende Erfindung betrifft eine Druckregel-Ventilvorrichtung für die Zuführung von korrosiven Medien, insbesondere eines korrosiven Kraftstoffs zu einem Verbrennungsmotor, mit einem Ventilgehäuse mit einem Medieneingang und einem Medienausgang, einem fest im Ventilgehäuse vorgesehenen Ventilsitz, der eine Ventilsitzöffnung aufweist, die eine Verbindung zwischen Medieneingang und Medienausgang schafft, und einem Ventilkörper, der zwischen einer ersten und einer zweiten Endposition bewegbar gehalten ist, wobei er in der ersten Endposition am Ventilsitz aufliegt und die Ventilsitzöffnung verschließt und in der zweiten Endposition die Ventilsitzöffnung zumindest teilweise freigibt, wobei der Ventilkörper ein rohrförmiges Gehäuse umfasst.

Druckregel-Ventilvorrichtungen der vorgenannten Art sind allgemein bekannt, beispielsweise aus US 3,643,683 A. Sie werden beispielsweise in Motoren-Testständen eingesetzt, um Kraftstoff präzise dosiert bzw. reproduzierbar konditioniert dem Verbrennungsmotor zuzuführen. Es hat sich in der Praxis gezeigt, dass die modernen Kraftstoffe deutlich korrosiver sind als früher und damit die Druckregel-Ventilvorrichtungen stark beanspruchen. Korrosive Beschädigungen können zu Funktionsbeeinträchtigungen oder im schlimmsten Fall zum Totalausfall der Druckregel-Ventilvorrichtung führen.

Weitere Ventilvorrichtungen sind in DE 198 37 556 C1, EP 0 473 917 A1, EP 0 534 487 A2, US 2 524 446 A, DE 12 34 469 B oder EP 0 257 430 A1 gezeigt.

Vor diesem Hintergrund besteht eine Aufgabe der vorliegenden Erfindung darin, die Druckregel-Ventilvorrichtung so auszubilden, dass keine Beschädigungen mehr durch korrosive Medien entstehen können , ein gutes Ansprechverhalten erzielt wird und die Kosten für die Druckregel-Ventilvorrichtung so gering wie möglich gehalten werden.

Diese Aufgabe wird von der Druckregel-Ventilvorrichtung mit den Merkmalen des Anspruchs 1 gelöst.

Die Kombination aus einem Dichtelement mit einer Dichtlippe, die an dem rohrförmigen Gehäuse des Ventilkörpers flächig anliegt, und dem Einsatz eines PTFE-Materials führt einerseits dazu, dass die Abdichtung gegenüber korrosiven Medien resistent ist und dabei andererseits eine ruckfreie Bewegung des Ventilkörpers zur exakten Steuerung des Mediendurchflusses durch die Ventilöffnung erlaubt.

Insbesondere die geringe Haftreibung der Dichtlippe, die nicht höher ist als die Gleitreibung, ermöglicht ein sensibles Ansprechverhalten und damit eine sehr genaue Steuerung bzw. Regelung.

Die gelenkige Verbindung von Steuerstößel und Ventilkörper hat den Vorteil, dass die Fertigungspräzision der Bauteile nicht erhöht werden muss, obgleich das Dichtelement aufgrund seines Aufbaus keinen Achsversatz von Ventilkörper und Stößel zuläßt. Aufgrund der losen, d.b. gelenkigen Verbindung zwischen Ventilkörper und Steuerstößel kann sich der Ventilkörper selbst dynamisch durch die Strömung am Ventilsitz zentrieren. Bei einer festeren Verbindung zwischen Ventilkörper und Steuerstößel müsste die Fertigungsprazision sehr noch sein, um einen Achsversatz zu vermeiden. Insgesamt führen diese Maßnahmen also zu Kosteneinsparungen, ohne technische Nachteile zu haben.

Bevorzugt ist das Material der Dichtlippe mit Graphit versetzt. Dies bringt einen weiteren Vorteil bezüglich einer ruckfreien Bewegung des Ventilkörpers.

Bei einer bevorzugten Weiterbildung ist das Ventilgehäuse so ausgestaltet, dass ein Raum auf einer Seite der Dichtlippe mit dem Medieneingang in Verbindung steht, so dass ein im Medieneingang herrschender Druck auf die Dichtlippe wirkt, derart, dass die Dichtlippe an das rohrförmige Gehäuse gedrückt wird.

Das heißt mit anderen Worten, dass der am Medieneingang herrschende Druck zur Verbesserung der Abdichtung genutzt wird. Die Abdichtwirkung des Dichterements wird damit deutlich verbessert. Der Druck von der einen Seite wirkt auch wie ein steter Nachstelleffekt auf das flexible Dichtelement, so dass auch bei Verschleiß die Dichtigkeit sehr lange erhalten bleibt. Darüber hinaus kann das rohrförmige Gehäuse des Ventilkörpers größere Toleranzschwankungen aufweisen, ohne dass die Dichtungswirkung verloren ginge. Dieses geringere Maß an Präzision bei der Fertigung führt zu deutlichen Kostenvorteilen.

Bei einer bevorzugten Weiterbildung sind in Längsrichtung des Steuerstößels zumindest zwei zueinander beabstandete Stützscheiben im Ventilgehäuse vorgesehen, die den Steuerstößel quer zu dessen Längsrichtung abstützen und in Längsrichtung führen. Bevorzugt sind die Stützscheiben aus einem PTFE-Material hergestellt, das vorzugsweise Graphit enthält. Weiter bevorzugt sind in einen tiefen Einstich in den Stützscheiben O-Ringe, vorzugsweise Standard-Chemraz-O-Ringe, eingebracht.

Diese Maßnahmen haben den Vorteil, dass einerseits eine sehr gute Gehäuseabdichtung ermöglicht wird und andererseits der Steuerstößel ruckfrei gleiten kann und zudem gut geführt ist. Die Stützscheibe sorgen insbesondere auch dafür, dass die Querkräfte auch bei starken Druckstößen und Schwingungen aufgenommen werden, um das Dichtelernent vor Beschädigung zu schützen.

Ein weiterer Vorteil besteht darin, dass bezüglich des Ventilgehäuses keine zu hohen Toleranzanforderungen bestehen müssen, so dass hier Kosten eingespart werden können.

Der tiefe Einstich hat den Zweck, dass der O-Ring darin auch in die Wellenposition quer gleiten kann, die durch die Montage des Antriebs mit entsprechend großen Toleranzen vorgegeben wird. Daraus ergeben sich besondere Einsparungen durch grobe Toleranzen.

Bei einer bevorzugten Weiterbildung ist zumindest der Steuerstößel an seiner Außenseite poliert.

Diese Maßnahme hat den Vorteil, dass die Gleitreibung, insbesondere im Bereich der Stützscheiben, weiter reduziert wird, so dass ein sehr sensibles Ansprechverhalten möglich wird.

Bei einer bevorzugten Weiterbildung ist das dem Ventilkörper abgewandte Ende des Steuerstößels mit einer Membran verbunden, deren eine Seite mit einem Steuerdruck beaufschlagbar ist, um über diesen Steuerdruck den Steuerstößel auszulenken. Bevorzugt ist die Verbindung zwischen Membran und Steuerstößel gelenkig ausgebildet.

Auch diese Maßnahmen tragen dazu bei, die Anforderungen an die Fertigungstoleranz gering zu halten, um damit Kosten einsparen zu können.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind. Der Schutzumfang wird jedoch durch die Ansprüche definiert.

Die Erfindung wird nun anhand eines Ausführungsbeispiels unter Bezugnahme auf die Zeichnung näher erläutert. Dabei zeigen:
- Fig. 1: eine Schnittdarstellung einer erfindungsgemäßen Druckregel-Ventilvorrichtung in geschlossenem Zustand;
- Fig. 2a, b: die in Fig. 1 gezeigte Druckregel-Ventilvorrichtung in einer Mittelstellung und einer Offenstellung;
- Fig. 3: eine perspektivische Darstellung der Druckregel-Ventilvorrichtung, und
- Fig. 4: eine Schnittdarstellung einer erfindungsgemäßen Druckregel-Ventilvorrichtung in einer abgewandelten Form und entlang einer anderen Ebene als in Fig 1 geschnitten.

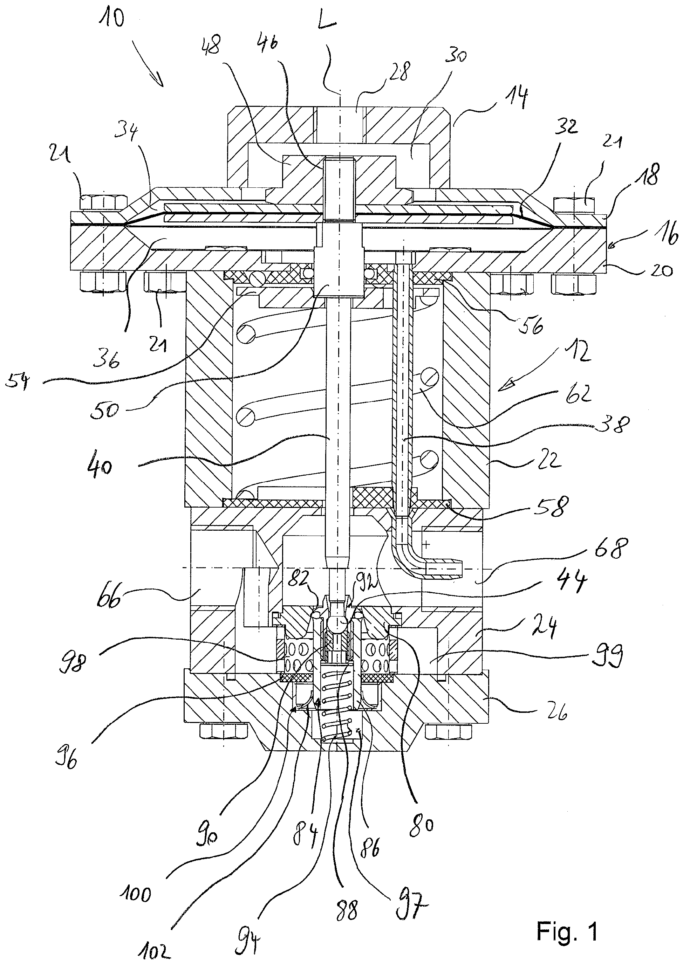

Fig. 1 zeigt im Längsschnitt eine Druckregel-Ventilvorrichtung, die mit dem Bezugszeichen 10 gekennzeichnet ist. Diese Druckregel-Ventilvorrichtung ist dazu vorgesehen, Kraftstoff druckgeregelt einem Verbrennungsmotor in einem Prüfstand zuzuführen.

Die Druckregel-Ventilvorrichtung 10 (nachfolgend kurz Ventilvorrichtung genannt) umfasst ein Ventilgehäuse 12, das aus mehreren zumeist rotationssymmetrisch ausgebildeten Baugruppen aufgebaut ist, nämlich - von oben nach unten gesehen - einem Deckel 14, einem Membrangehäuse 16, einem rohrförmigen mittleren Gehäuseabschnitt 22, einem Medien-Ein/Ausgangsabschnitt 24 und einem Deckel 26.

Die einzelnen vorgenannten Baugruppen sind beispielsweise über Schrauben oder andere Befestigungsarten miteinander verbunden, was teilweise in der Fig. 1 zu erkennen ist.

Das Membrangehäuse 16 ist seinerseits aus zwei Bauteilen aufgebaut, nämlich einem Deckel 18 und einem Unterteil 20, die beide ebenfalls rotationssymmetrisch sind und über mehrere Schrauben im Umfangsbereich miteinander verbunden sind. Die Schrauben sind in Fig. 1 mit dem Bezugszeichen 21 gekennzeichnet.

Der obere Deckel 14 weist eine zu einer Längsachse L zentrierte Bohrung 28 auf, die in einen Innenraum 30 mündet, der durch den Deckel 18 des Membrangehäuses 16 und den oberen Deckel 14 gebildet wird.

Innerhalb des Membrangehäuses 16 ist eine Membran 32 vorgesehen, die sich durch den gesamten Innenraum des Membrangehäuses erstreckt und diesen Raum in einen oberen Steuerdruckraum 34 und einen unteren Druckraum 36 hermetisch trennt. Die Membran 32 ist flexibel ausgeführt, so dass eine Auslenkung in Richtung der mit L gekennzeichneten Längsachse ermöglicht wird. Bevorzugt ist die Membran 32 aus einem PTFE-Material hergestellt.

Innerhalb des Ventilgehäuses 12 erstreckt sich in Richtung der Längsachse L ein Stößel 40, der an seinem oberen Ende an der Membran 32 befestigt ist und am unteren Ende mit einer Kugel abschließt, die innerhalb des Medien-Ein/Ausgangsabschnitts 24 des Ventilgehäuses 12 liegt.

Die Befestigung des Stößels 40 an der Membran 32 erfolgt über eine Verschraubung 46, die an einem oberen Halteteil 48 oberhalb der Membran 32 liegt, d.h. im Innenraum 30 des Deckels 14. Unterhalb der Membran 32 ist ein unteres Halteteil 50 vorgesehen, das einerseits mit dem Stößel 40 verbunden ist und andererseits mit dem oberen Halteteil 48.

Eine Auslenkung der Membran 32 führt somit zu einer Auslenkung des Stößels 40 in Längsrichtung. Die Position des Stößels 40 in Längsrichtung, insbesondere die Position der Kugel 44, lässt sich über die Verschraubung 46 einstellen.

Der Stößel 40 ist innerhalb des Ventilgehäuses 12 durch zwei Stützscheiben geführt, nämlich eine erste Stützscheibe 56, die im Übergang zwischen Membrangehäuse 16 und mittlerem Gehäuseabschnitt 22 liegt, und einer Stützscheibe 58, die das untere Ende des mittleren Gehäuseabschnitts 22 abschließt, also im Übergang zwischen mittlerem Gehäuseabschnitt 22 und Medien-Ein/Ausgangsabschnitt 24 angeordnet ist. Die beiden Stützscheiben 56, 58 sind bevorzugt aus einem PTFE-Material gefertigt, das weiter bevorzugt Graphit enthält.

Aus der Fig. 1 ist ersichtlich, dass die obere Stützscheibe 56 eine O-Ring-Dichtung aufweist, die am Außenumfang des unteren Halteteils 50 anliegt und damit den Innenraum des mittleren Gehäuseabschnitts 22 zum unteren Druckraum 36 des Membrangehäuses 16 abdichtet.

An dem unteren Halteteil 50 bzw. dem Stößel 40 ist eine Abstützscheibe 54 angebracht, die ein Ende einer Feder 62 abstützt. Das andere Ende dieser vorzugsweise als Schraubenfeder ausgebildeten Feder 62 stützt sich an der unteren Stützscheibe 58 ab. Die Funktion dieser Feder 62 besteht darin, den Stößel 40 in Längsrichtung nach oben zu drücken und damit die Membran 32 nach oben in Längsrichtung auszulenken. Diese Position ist in Fig. 1 gezeigt.

Der Medien-Ein/Ausgangsabschnitt 24 des Ventilgehäuses 12 weist einen Medieneingang 66 und einen Medienausgang 68 auf, wobei die erforderlichen Öffnungen im Umfangsbereich dieses rotationssymmetrischen Bauteils vorgesehen sind. Der Medieneingang 66 ist über eine Ventilgruppe mit dem Medienausgang 68 strömungstechnisch verbunden, wobei über die Ventilgruppe, die nachfolgend noch detailliert beschrieben werden wird, diese Verbindung geöffnet und geschlossen werden kann.

Die genannte Ventilgruppe umfasst einen Ventilsitz 80, der innerhalb des Gehäuseabschnitts 24 fest eingebaut ist, wobei dessen Ventilsitzöffnung 82 zentriert zur Längsachse L liegt.

Die Ventilgruppe umfasst ferner einen Ventilkörper 84, der ebenfalls zentrisch zur Längsachse L liegt und an die Größe der Ventilsitzöffnung 82 bezüglich seines Durchmessers angepasst ist. Der Ventilkörper 84 weist u.a. ein rohrförmiges Gehäuse 86 auf, das eine Abstützscheibe 88 im Inneren hält. Diese Abstützscheibe 88 liegt rechtwinklig zur Längsachse L und stützt eine darüberliegende Gelenkaufnahme 90 ab. An ihrer Oberseite ist die Gelenkaufnahme 90 so ausgebildet, dass die Kugel 44 des Stößels 40 aufgenommen werden kann.

Das obere Ende des rohrförmigen Gehäuses 86 des Ventilkörpers 84 wird durch ein Ventilabdichtelement 92 abgeschlossen, welches an seiner Außenseite ein ringförmiges Dichtelement, vorzugsweise ein O-Ring besitzt, das mit der Ventilsitzöffnung 82 dichtend zusammenwirken kann. Der Einsatz eines handelsüblichen O-Rings ermöglicht eine sehr kostengünstige Abdichtung des Ventilsitzes.

Die Funktion dieses Ventilabdichtelements 92 besteht folglich einerseits darin, den Stößel 40 in axialer Richtung fest mit dem Ventilkörper 84 zu verbinden, und andererseits die Ventilsitzöffnung 82 hermetisch dicht abzuschließen. Obgleich der Stößel 40 in axialer Richtung fest mit dem Ventilkörper 84 verbunden ist, ist eine Kippbewegung der beiden Bauteile über das Kugelgelenk aus Kugel 44 und Gelenkaufnahme 90 möglich.

Fig. 1 lässt noch erkennen, dass eine weitere Feder 94 vorgesehen ist, die sich einerseits am unteren Deckel 26 und andererseits an der Abstützscheibe 88 innerhalb des rohrförmigen Gehäuses 86 des Ventilkörpers 84 abstützt. Diese Feder drückt folglich den Ventilkörper 84 nach oben.

Zwischen dem rotationssymmetrischen Ventilsitz 80 und einer Führungsscheibe 96, die im oberen Bereich des Deckels 26 zentriert zur Längsachse L liegt, ist ein Rohrsieb 98 vorgesehen, bei dem es sich um ein rohrförmiges Bauteil handelt, das in seiner Zylinderwand Öffnungen aufweist. Dieses Rohrsieb 98 liegt ebenfalls zentrisch zur Längsachse L und umgibt zumindest einen Längsabschnitt des rohrförmigen Gehäuses 86.

Das Rohrsieb 98 liegt folglich in einem Ringraum 99, der im unteren Längsabschnitt des Medien-Ein/Ausgangsabschnitts 24 des Ventilgehäuses 12 vorgesehen ist und der in Fluidverbindung mit dem Medieneingang 66 steht.

In Fig. 1 ist noch zu erkennen, dass der untere Deckel 26 eine zentrale Ausnehmung aufweist, in die der Ventilkörper 84 hineinragt und in der die Feder 94 liegt. Diese Ausnehmung wird nach oben von der bereits erwähnten Führungsscheibe 96 abgeschlossen, allerdings nicht hermetisch. Das bedeutet mit anderen Worten, dass eine Fluidverbindung zwischen dem Ringraum 99 und dem unterhalb der Führungsscheibe 96 liegenden Raum besteht.

Um nun zu verhindern, dass auch der Innenraum des Ventilkörpers 84 in Fluidverbindung mit dem Ringraum 99 gelangt, ist im Deckel 26 im oberen Teil der Ausnehmung ein Dichtelement 100 vorgesehen. Dieses Dichtelement liegt mit seiner Außenseite an der kreisförmigen Umfangsfläche der Ausnehmung an und erstreckt sich nach innen zum Ventilkörper 84 hin. Das Dichtelement 100 umfasst eine ringförmige Dichtlippe 102, die sich schräg (relativ zu der Längsachse des Ventilkörpers) nach innen zum Ventilkörper erstreckt. Die radiale Abmessung der Dichtlippe 102 ist so bemessen, dass sie mit einem radial inneren Abschnitt flächig an dem rohrförmigen Gehäuse 86 des Ventilkörpers 84 entlang des gesamten Umfangs des Ventilkörpers anliegt. Der innere Abschnitt der Dichtlippe 102 zeigt dabei nach oben in Richtung der Führungsscheibe 96, so dass eine Beaufschlagung des Raums oberhalb der Dichtlippe mit Druck dafür sorgt, dass die Dichtlippe 102 nach unten und damit stärker an den Umfang des Ventilkörpers angedrückt wird. Die Dichtlippe 102 dichtet somit über den gesamten Umfang des Ventilkörpers ab, wobei die Abdichtung mit zunehmendem Druckunterschied zu dem unterhalb der Dichtlippe liegenden Raum besser wird. Bevorzugt besitzt dieses Dichtelement 100 ein Gehäuse aus Edelstahl, während die Dichtlippe 102 erfindungsgemäß aus einem PTFE-Material besteht, das bevorzugt auch Graphit enthält.

In dem in Figur 1 gezeigten Ausführungsbeispiel hat das Gehäuse, bevorzugt aus Edelstahl, des Dichtelements 100 eine "Topfform" mit einer zylindrischen Außenwand, die an der Umfangsfläche der Ausnehmung anliegt. Der Boden des topfförmigen Gehäuses besitzt eine zentrale Öffnung, durch die sich zumindest die Feder 94 erstrecken kann. Innerhalb des Gehäuses und mit diesem verbunden liegt dann die Dichtlippe 102.

Dadurch, dass der Bereich oberhalb der Dichtlippe 102 in Verbindung mit dem Medieneingang 66 steht, wirkt der dort herrschende Druck im Betrieb auch auf diese Dichtlippe 102 und sorgt damit dafür, dass diese sicher an das rohrförmige Gehäuse 86 angepresst wird.

Durch Auslenkung des Stößels 40 in Längsrichtung lässt sich der Ventilkörper 84 auslenken, um damit die Ventilsitzöffnung 82 zumindest teilweise freizugeben, um eine Fluidverbindung zwischen Medieneingang, Ringraum 99 und Medienausgang 68 herzustellen. Über ein Druckrohr 38, das als Venturi-Rohr ausgebildet ist, lässt sich der Druck im Bereich des Medienausgangs nach oben in den unteren Druckraum 36 des Membrangehäuses 16 führen. Wie sich aus Fig. 1 ergibt, verläuft dieses Druckrohr 38 parallel, aber versetzt zu der Längsachse L durch die beiden Stützscheiben 58 und 56, die nicht nur für eine Abstützung, sondern auch für eine Abdichtung sorgen.

Um die an den Stützscheiben 56, 58, der Führungsscheibe 96 und der Dichtlippe 102 auftretenden Reibungskräfte so gering wie möglich zu halten, sind die entsprechenden Bauteile des Stößels 40 und des Ventilkörpers 84 poliert ausgeführt.

Nachfolgend soll nun kurz die Funktionsweise dieser Druckregel-Ventilvorrichtung erläutert werden.

Über einen Pilotregler wird ein sog. Steuerdruck durch die Öffnung 28 im Deckel 26 auf die Membran 32 gebracht. Ist der Steuerdruck größer als der Gegendruck, der durch die Federn 62, 94 aufgebaut wird, wird die Membran 32 in Längsrichtung nach unten ausgelenkt und nimmt dabei den Stößel 40 mit, der sich ebenfalls in Längsrichtung nach unten bewegt. Durch diese Längsbewegung gelangt das Ventilabdichtelement 92 aus der abdichtenden Position und gibt einen Ringspalt in der Ventilsitzöffnung 82 frei. Durch diesen Ringspalt kann nun ein Medium vom Medieneingang 66 über den Ringraum 99 zum Medienausgang 68 gelangen. Je nach Auslenkung der Membran 32 wird die Ventilsitzöffnung mehr oder weniger weit geöffnet, so dass dadurch der Durchfluss gesteuert werden kann.

Um Druckabfälle bei stark wechselnden Durchflussleistungen auszugleichen, wird über das Venturi-Druckrohr 38 Druck in den unteren Druckraum 36 geleitet, der dem im Steuerdruckraum 34 vorherrschenden Druck (Steuerdruck) entgegenwirkt. Durch den Venturi-Effekt des Druckrohrs 38 erfolgt ein Druckausgleich des sonst entstehenden Druckverlustes bei großen Durchflussleistungen in der Ventilvorrichtung 10. Sollte der Steuerdruck ausfallen oder die Membran 32 einen Riss bekommen, sorgen die beiden Federn 62 und 94 dafür, dass der Ventilkörper 84 nach oben gedrückt wird und damit die Ventilsitzöffnung vollständig schließt.

An dieser Stelle sei angemerkt, dass der auf die Membran 32 wirkende Steuerdruck nicht nur über ein flüssiges oder gasförmiges Druckmedium aufgebracht werden kann. Vielmehr sind auch andere mechanische Lösungen denkbar. Beispielsweise könnte die Membran 32 mit einer Federkraft beaufschlagt werden, die bspw. von einer Schraubenfeder geliefert wird. Allerdings sollte die Feder so angeordnet bzw. gehalten werden, dass die den Steuerdruck liefernde Federkraft einstellbar ist. Statt dem Deckel 14 könnte in diesem Fall ein rohförmiges Gehäuse vorgesehen werden, das die Feder aufnimmt, wobei sich die Feder einerseits an der Membran 32 direkt oder indirekt abstützt und andererseits an einer in Längsrichtung verstellbaren oberen Abstützung. Selbstverständlich sind andere Lösungen zur Beaufschlagung der Membran mit einem Steuerdruck ebenfalls denkbar.

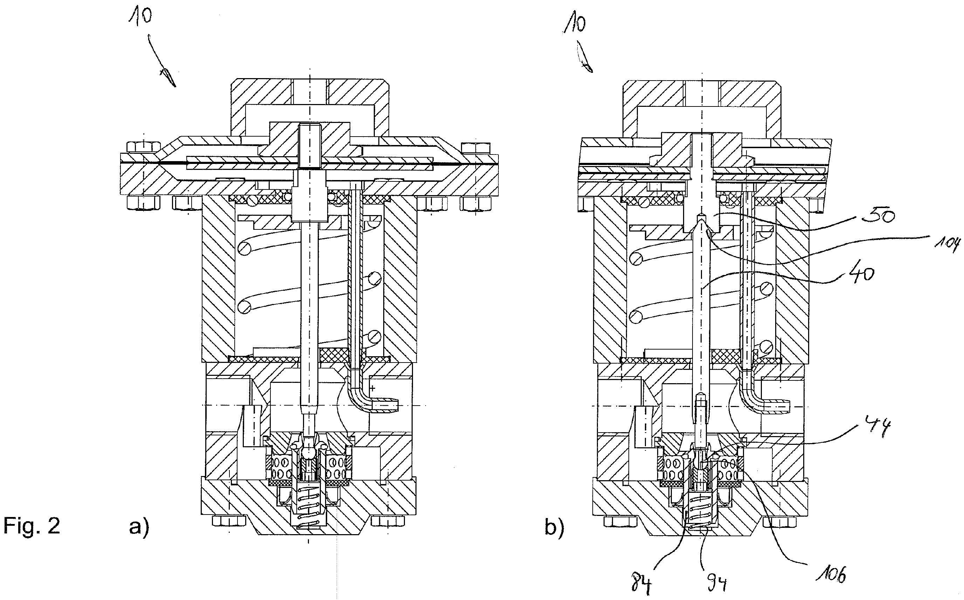

In den beiden Fig. 2a und 2b ist die Druckregel-Ventilvorrichtung 10 in zwei unterschiedlichen Regelpositionen gezeigt, nämlich in Fig. 2a in einer Mittelstellungsposition und in Fig. 2b in der vollständigen Öffnungsposition. Der Aufbau der in Fig. 2a, b gezeigten Ventilvorrichtungen 10 ist identisch zu der Ventilvorrichtung 10 der Fig. 1, so dass auf eine weitere Beschreibung des Aufbaus an dieser Stelle verzichtet werden kann.

Allerdings lässt Fig. 2b noch zwei Details erkennen, die in Fig. 1 nicht zu sehen sind. So ist der Stößel 14 über ein kegelförmiges Ende 104 gelenkig mit dem unteren Halteteil 50 verbunden. Ferner ist zu erkennen, dass die Kugel 44 des Stößels 14 einen in Längsrichtung verlaufenden Kanal 106 aufweist, der in einen oberen Querkanal mündet. Dieser Kanal 106 ermöglicht einen Druckausgleich zwischen dem Bereich oberhalb des Ventilkörpers 84 und dem unteren Bereich, in dem die Feder 94 liegt.

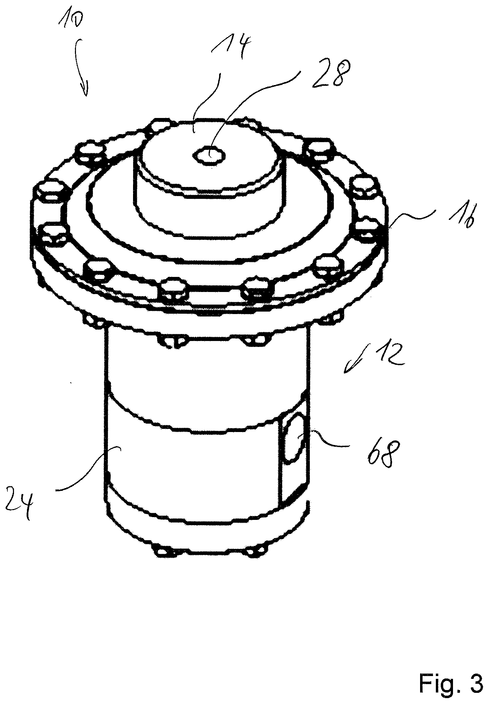

In Fig. 3 ist nun die Ventilvorrichtung 10 in perspektivischer Darstellung gezeigt. Gut zu erkennen sind die verschiedenen Abschnitte des Ventilgehäuses 12, wobei insbesondere gut das Membrangehäuse 16, der Deckel 14, sowie der Medien-Ein/Ausgangsabschnitt 24 mit dem Medienausgang 68 zu erkennen ist.

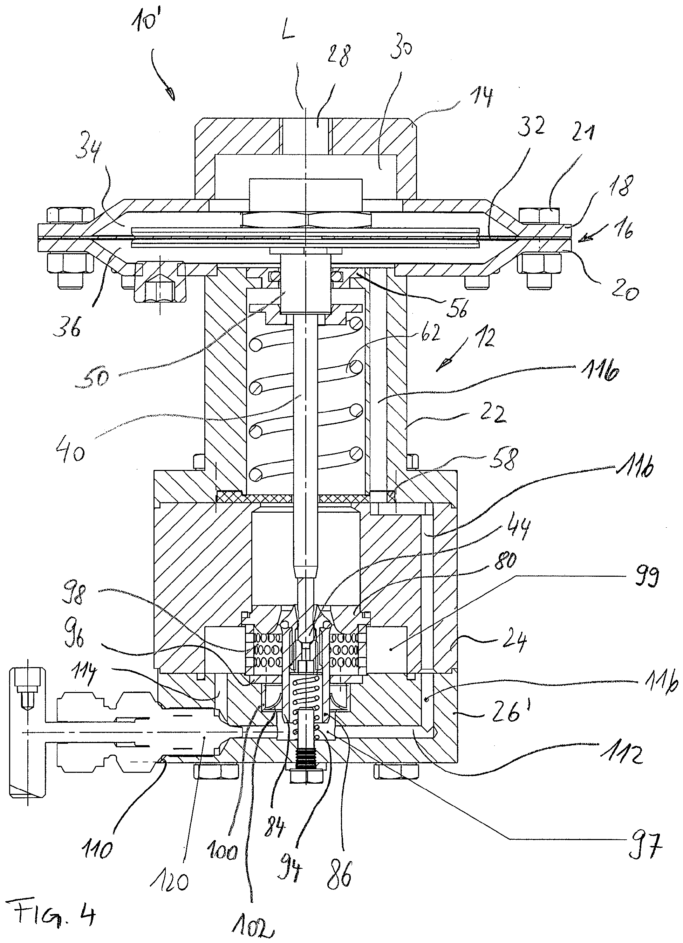

In Fig. 4 ist eine leicht abgewandelte Ausführungsform der Druckregel-Ventilvorrichtung von Fig. 1 gezeigt. Um Widerholungen zu vermeiden, werden gleiche Teile wie in Fig. 1 mit den gleichen Bezugszeichen gekennzeichnet, so dass auf deren nochmalige Beschreibung verzichtet werden kann.

Die abgewandelte Ausführungsform ist mit dem Bezugszeichen 10' gekennzeichnet und unterscheidet sich im wesentlichen in der Ausgestaltung des Deckels 26', wobei diese Veränderung keinen Einfluss auf die oben erläuterte Funktion hat, sondern zur Erreichung einer Zusatzfunktion vorgesehen ist.

Der Deckel 26' weist seitlich an seinem Umfang eine Öffnung 110 auf, die in einen horizontal verlaufenden Kanal 112 und einen ersten vertikal verlaufenden Kanal 114 mündet. Der vertikale Kanal 114 mündet in den Ringraum 99, während der horizontale Kanal 112 zunächst durch einen Raum 97, der auch in Figur 1 zu erkennen ist, läuft und dann in einen vertikal verlaufenden Kanal 116 mündet.

Dieser vertikale Kanal 116 erstreckt sich durch den Deckel 26', den Medien-Ein-Ausgangsabschnitt 24 und den mittleren Abschnitt 22, um schließlich in den unteren Druckraum 36 des Membrangehäuses zu münden.

Über die Öffnung 110 lässt sich folglich sowohl der Ringraum 99, als auch der Raum 97 und der Druckraum 36 fluidtechnisch erreichen. Über dieses Kanalsystem können somit diese Räume 99, 97 und 36 einer Reinigung unterzogen werden.

Um den Durchfluss von Reinigungsflüssigkeit zu steuern, kann in die Öffnung 110 ein Ventilblock eingesetzt, vorzugsweise eingeschraubt werden, wobei der Ventilblock elektrisch, pneumatisch oder mechanisch steuerbar ist. In Fig. 4 ist ein solcher Ventilblock 120 schematisch angedeutet.

Die Druckregel-Ventilvorrichtung kann damit also gereinigt oder auch sterilisiert werden, was in vielen Anwendungsbereichen erforderlich ist. Ein breites Einsatzgebiet für diese Ventilvorrichtung wird folglich erzielt.

Am Ende sei noch darauf hingewiesen, dass der in Fig. 1 gezeigte Deckel 26 ohne weiteres durch den Deckel 26' gemäß Fig. 4 ausgetauscht werden kann. Ferner sei noch darauf hingewiesen, dass bestimmte Elemente der Ventilvorrichtung 10 aus Fig. 1, wie bspw. Medieneingang und Medienausgang 66, 68, nicht in Fig. 4 zu sehen sind, was lediglich daran liegt, dass der Schnitt in einer anderen Ebene verläuft. Selbstverständlich sind diese Elemente ebenfalls vorhanden.

Die beschriebenen Ventilvorrichtungen sind besonders für korrosive Medien, wie andere Kraftstoffe, geeignet. Dies liegt unter anderem daran, dass das Dichtelement 100 mit seiner PTFE-Dichtlippe 102 und bevorzugt seinem Edelstahlgehäuse sehr resistent ausgebildet ist. Gleiches gilt auch für die eingesetzte PTFE-Stützscheibe.

## Patentansprüche

1. Druckregel-Ventilvorrichtung für die Zuführung von korrosiven Medien, insbesondere eines korrosiven Kraftstoffs zu einem Verbrennungsmotor, mit einem Ventilgehäuse mit einem Medieneingang und einem Medienausgang, einem fest im Ventilgehäuse (12) vorgesehenen Ventilsitz, der eine Ventilöffnung aufweist, die eine Verbindung zwischen Medieneingang und Medienausgang schafft,
einem Ventilkörper, der zwischen einer ersten und einer zweiten Endposition bewegbar gehalten ist, wobei er in der ersten Endposition am Ventilsitz aufliegt und die Ventilsitzöffnung verschließt und in der zweiten Endposition die Ventilsitzöffnung zumindest teilweise freigibt, wobei der Ventilkörper ein rohrförmiges Gehäuse umfasst,
einem Dichtelement (100), das eine Dichtlippe (102) aufweist, die an dem Gehäuse (86) des Ventilkörpers (84) anliegt und mit diesem abdichtend zusammenwirkt, wobei zumindest die Dichtlippe (102) aus einem PTFE (Polytetrafluorethylen)-Material besteht, und
einem länglichen Steuerstößel (40) zur Steuerung des Ventilkörpers (84), dessen eines Ende mit dem Ventilkörper (84) zusammenwirkt, wobei Steuerstößel (40) und Ventilkörper (84) gelenkig verbunden sind.

2. Druckregel-Ventilvorrichtung nach Anspruch 1, **dadurch gekennzeichnet, dass** das Material der Dichtlippe (102) zusätzlich Graphit enthält.

3. Druckregel-Ventilvorrichtung nach Anspruch 1 oder 2, **dadurch gekennzeichnet, dass** das Ventilgehäuse (12) so ausgestaltet ist, dass ein Raum auf einer Seite der Dichtlippe (102) mit dem Medieneingang (66) in Verbindung steht, so dass ein im Medieneingang herrschender Druck auf die Dichtlippe wirkt, derart, dass die Dichtlippe an das rohrförmige Gehäuse (86) gedrückt wird.

4. Druckregel-Ventilvorrichtung nach Anspruch 1, **dadurch gekennzeichnet, dass** der Steuerstößel (40) mit dem Ventilkörper (84) über ein Kugelgelenk (44, 90) miteinander verbunden sind, das Kippbewegungen zulässt.

5. Druckregel-Ventilvorrichtung nach Anspruch 1_oder 4, **dadurch gekennzeichnet, dass** in Längsrichtung des Steuerstößels (40) zumindest zwei zueinander beabstandete Stützscheiben (56, 58) im Ventilgehäuse (12, 22) vorgesehen sind, die den Steuerstößel quer zu dessen Längsrichtung abstützen und in Längsrichtung führen.

6. Druckregel-Ventilvorrichtung nach Anspruch 5, **dadurch gekennzeichnet, dass** die Stützscheiben (56, 58) aus einem PTFE Material, vorzugsweise versetzt mit Graphit, bestehen.

7. Druckregel-Ventilvorrichtung nach einem der Ansprüche 1 bits 6, **dadurch gekennzeichnet, dass** der Steuerstößel (40) an seiner Außenseite poliert ist.

8. Druckregel-Ventilvorrichtung nach einem der Ansprüche 1 bis 7, **dadurch gekennzeichnet, dass** das dem Ventilkörper (84) abgewandte Ende des Steuerstößels (40) mit einer Membran (32) verbunden ist, deren eine Seite mit einem Steuerdruck beaufschlagbar ist, um über diesen Steuerdruck den Steuerstößel auszulenken.

9. Druckregel-Ventilvorrichtung nach Anspruch 8, **dadurch gekennzeichnet, dass** die Verbindung (104) zwischen Membran (32) und Steuerstößel (40) gelenkig ausgebildet ist.

10. Druckrcgel-Ventilvorrichtring nach einem der vorhergehenden Ansprüche, **dadurch gekennzeichnet, dass** eine Reinigungseinheit (120, 112, 114, 116, 110) vorgesehen ist, die eine Zuführung eines Reinigungsmittels in innen liegende Bereiche (99, 97, 36) der Ventilvorrichtung ermöglicht,

11. Druckregel-Ventilvorrichtung nach Anspruch 10, **dadurch gekennzeichnet, dass** die Reinigungseinheit in einem Deckel (26') vorgesehen ist, wobei der Deckel (26') einen Öffnung zur Aufnahme eines Ventilblocks (120) aufweist, von der Kanäle (112, 114, 116) ausgehen, die derart ausgebildet sind, dass sie eine Verbindung zur den zu reinigenden Bereichen herstellen.

## Claims

1. Pressure control valve device for supplying corrosive media, in particular a corrosive fuel to an internal combustion engine, comprising
a valve housing with a media inlet and a media outlet,
a valve seat fixedly provided in the valve housing (12) and having a valve opening which creates a connection between media inlet and media outlet,
a valve body, which is retained such that it can move between a first and a second end position, wherein in the first end position it rests on the valve seat and closes the valve seat opening, and in the second end position at least partly opens the valve seat opening, wherein the valve body comprises a tubular housing,
a sealing element (100) which has a sealing lip (102) which rests on the housing (86) of the valve body (84) and interacts in a sealing manner with the latter, wherein at least the sealing lip (102) consists of a PTFE (polytetrafluoroethylene) material, and
an elongated control plunger (40) for controlling the valve body (84), of which one end interacts with the valve body (84), wherein control plunger (40) and valve body (84) are connected in an articulated manner.

2. Pressure control valve device according to Claim 1, **characterized in that** the material of the sealing lip (102) additionally contains graphite.

3. Pressure control valve device according to Claim 1 or 2, **characterized in that** the valve housing (12) is configured in such a way that a chamber on the side of the sealing lip (102) is connected to the media inlet (66), so that a pressure prevailing in the media inlet acts on the sealing lip in such a way that the sealing lip is pressed onto the tubular housing (86).

4. Pressure control valve device according to Claim 1, **characterized in that** the control plunger (40) and the valve body (84) are connected to each other via a ball joint (44, 90), which permits a tilting movement.

5. Pressure control valve device according to Claim 1 or 4, **characterized in that**, in the longitudinal direction of the control plunger (40), at least two supporting discs (56, 58) spaced apart from one another are provided in the valve housing (12, 22), which support the control plunger transversely with respect to its longitudinal direction and guide the same in the longitudinal direction.

6. Pressure control valve device according to Claim 5, **characterized in that** the supporting discs (56, 58) consist of a PTFE material, preferably with graphite added.

7. Pressure control valve device according to one of Claims 1 to 6, **characterized in that** the control plunger (40) is polished on its outer side.

8. Pressure control valve device according to one of Claims 1 to 7, **characterized in that** the end of the control plunger (40) that faces away from the valve body (84) is connected to a diaphragm (32), one side of which can be loaded with a control pressure in order to deflect the control plunger via this control pressure.

9. Pressure control valve device according to Claim 8, **characterized in that** the connection (104) between diaphragm (32) and control plunger (40) is formed in an articulated manner.

10. Pressure control valve device according to one of the preceding claims, **characterized in that** a cleaning unit (120,112, 114, 116, 110) is provided, which permits a cleaning agent to be fed into the internal regions (99, 97, 36) of the valve device.

11. Pressure control valve device according to Claim 10, **characterized in that** the cleaning unit is provided in a cover (26'), wherein the cover (26') has an opening to accommodate a valve block (120), from which there lead channels (112, 114, 116) which are formed in such a way that they produce a connection to the regions to be cleaned.

## Revendications

1. Dispositif de soupape de régulation de pression servant à l'amenée de milieux corrosifs, en particulier d'un carburant corrosif à un moteur à combustion interne, avec un boîtier de soupape présentant une entrée de milieu et une sortie de milieu, un siège de soupape fixe prévu dans le boîtier de soupape (12), qui présente une ouverture de soupape qui procure une communication entre l'entrée de milieu et la sortie de milieu,
un corps de soupape, qui est maintenu de façon déplaçable entre une première position terminale et une seconde position terminale, dans lequel dans la première position terminale il s'applique sur le siège de soupape et ferme l'ouverture du siège de soupape et dans la seconde position terminale il libère au moins en partie l'ouverture du siège de soupape, dans lequel le corps de soupape comprend un boîtier tubulaire,
un élément d'étanchéité (100), qui présente une lèvre d'étanchéité (102), qui s'applique sur le boîtier (86) du corps de soupape (84) et coopère de façon étanche avec celui-ci, dans lequel au moins la lèvre d'étanchéité (102) se compose d'un matériau de PTFE (polytétrafluoroéthylène), et
un poussoir de commande allongé (40) pour commander le corps de soupape (84), dont une extrémité coopère avec le corps de soupape (84), dans lequel le poussoir de commande (40) et le corps de soupape (84) sont reliés par une articulation.

2. Dispositif de soupape de régulation de pression selon la revendication 1, **caractérisé en ce que** le matériau de la lèvre d'étanchéité (102) contient en outre du graphite.

3. Dispositif de soupape de régulation de pression selon la revendication 1 ou 2, **caractérisé en ce que** le boîtier de soupape (12) est configuré de telle manière qu'un espace sur un côté de la lèvre d'étanchéité (102) soit en communication avec l'entrée de milieu (66), de telle manière qu'une pression régnant dans l'entrée de milieu agisse sur la lèvre d'étanchéité, de telle manière que la lèvre d'étanchéité soit pressée sur le boîtier tubulaire (86).

4. Dispositif de soupape de régulation de pression selon la revendication 1, **caractérisé en ce que** le poussoir de commande (40) et le corps de soupape (84) sont reliés l'un à l'autre par une articulation sphérique (44, 90), qui permet des mouvements de basculement.

5. Dispositif de soupape de régulation de pression selon la revendication 1 ou 4, **caractérisé en ce qu'**il est prévu dans la direction longitudinale du poussoir de commande (40) au moins deux disques de soutien (56, 58) espacés l'un de l'autre dans le boîtier de soupape (12, 22), qui soutiennent le poussoir de commande transversalement à sa direction longitudinale et le guident dans la direction longitudinale.

6. Dispositif de soupape de régulation de pression selon la revendication 5, **caractérisé en ce que** les disques de soutien (56, 58) sont constitués d'un matériau de PTFE, de préférence mélangé avec du graphite.

7. Dispositif de soupape de régulation de pression selon l'une quelconque des revendications 1 à 6, **caractérisé en ce que** le poussoir de commande (40) est poli sur son côté extérieur.

8. Dispositif de soupape de régulation de pression selon l'une quelconque des revendications 1 à 7, **caractérisé en ce que** l'extrémité du poussoir de commande (40) éloignée du corps de soupape (84) est reliée à une membrane (32), dont un côté peut être soumis à une pression de commande, afin de dévier le poussoir de commande au moyen de cette pression de commande.

9. Dispositif de soupape de régulation de pression selon la revendication 8, **caractérisé en ce que** la liaison (104) entre la membrane (32) et le poussoir de commande (40) est réalisée de façon articulée.

10. Dispositif de soupape de régulation de pression selon l'une quelconque des revendications précédentes, **caractérisé en ce qu'**il est prévu une unité de nettoyage (120, 112, 114, 116, 110), qui permet une arrivée d'un agent de nettoyage dans des régions internes (99, 97, 36) du dispositif de soupape.

11. Dispositif de soupape de régulation de pression selon la revendication 10, **caractérisé en ce que** l'unité de nettoyage est prévue dans un couvercle (26'), dans lequel le couvercle (26') présente une ouverture destinée à recevoir un bloc de soupape (120), à partir de laquelle partent des canaux (112, 114, 116) qui sont configurés de telle manière qu'ils établissent une communication vers les régions à nettoyer.
